Europäisches Patentamt

European Patent Office

Office européen des brevets

(11) Publication number: **0 242 192**
**A1**

## (12) EUROPEAN PATENT APPLICATION

(21) Application number: **87303299.9**

(22) Date of filing: **15.04.87**

(51) Int. Cl.⁴: **B 65 G 67/60**

(30) Priority: **18.04.86 GB 8609497**

(43) Date of publication of application:
**21.10.87 Bulletin 87/43**

(84) Designated Contracting States: **DE FR IT NL SE**

(71) Applicant: **GEC MECHANICAL HANDLING LIMITED**
**Spencer Works Beanacre Road**
**Melksham Wiltshire SN12 8AX (GB)**

(72) Inventor: **Green, Raymond John**
**3 Whites Corner Whitley Nr. Melksham**
**Wiltshire (GB)**

(74) Representative: **Kirby, Harold Victor Albert**
**Central Patent Department Wembley Office The General**
**Electric Company, p.l.c. Hirst Research Centre East Lane**
**Wembley Middlesex HA9 7PP (GB)**

(54) **Material handling systems.**

(57) A material handling system having an elevator leg (B) carried by a nominally horizontal boom (A) and capable of being "kicked" inwards and outwards from the vertical, incorporates a pantograph arrangement linked to the leg and to a carrier located at the opposite end of the boom, and carrying a counterweight (E) such that movement of the elevator leg is accompanied by a simultaneous movement of the counterweight which compensates for changes in the position of the centre of gravity of the leg relative to the boom.

Fig.2.

# 0 242 192

**Description**

## Material Handling Systems

This invention relates to material handling systems of the kind designed for unloading loose material, which may be either non- or free-flowing, for example coal, iron ore, phosphates, grain and so on from the holds of barges and ships, or from storage containers, stockyards and the like, and which incorporates an elevator leg depending from a nominally horizontal boom and capable, in use, of raising the material and of depositing it on a moving belt or the like which carries it along the boom to be subsequently discharged therefrom, usually on to a suitable conveyor or into mobile containers such as lorries or railway wagons.

In such material handling systems the elevator leg is usually pivotable to a limited extent outwardly or inwardly from the vertical, in order to enable the leg to reach different parts of a hold, container, stockyard or the like, such movement commonly being referred to as "kicking". It will, however, be seen that such kicking movement will alter the position of the centre of gravity of the leg relative to the boom, and hence the loading on the respective end of the boom.

One object of the present invention is to provide means for automatically compensating, at least to some extent, for such changes in loading on the boom resulting from this movement of the elevator leg.

According to the invention a material handling system of the kind referred to, in which the elevator leg is capable of being kicked inwards and outwards from the vertical, incorporates a pantograph arrangement linked to the leg and to a pivoted carrier member located at or adjacent the opposite end of the boom and carrying a counterweight, such that pivoting movement of the elevator leg is accompanied by simultaneous movement of the counterweight in a direction such as to compensate for changes in the position of the centre of gravity of the leg relative to the boom.

By suitable design of the pantograph arrangement and in the choice of counterweight it is possible with such an arrangement to compensate substantially completely for such changes in the position of the centre of gravity of the elevator leg, as will subsequently be explained.

Usually in elevator systems of the kind referred to the boom is arranged to luff about a transverse horizontal axis relative to a main support structure, and the use of a pantograph arrangement in accordance with the invention can be designed to maintain a substantially balanced loading on the boom throughout its range of movement. The power requirements for effecting the luffing movement of the boom can thereby be significantly reduced.

Preferably also the pantograph arrangement is such as to ensure that the elevator leg remains at a substantially set kick angle over the full range of luffing movement of the boom.

One embodiment of the invention for use as a ship unloader will now be described by way of example with references to Figures 1 to 6 of the accompanying schematic drawings, in which

Figure 1 illustrates a side view of the ship unloader in diagrammatic form,

Figures 2 and 3 illustrate the manner in which the invention is operative to compensate for movements of the elevator leg and boom, and

Figures 4 to 6 illustrate different forms of ship unloading structures incorporating the invention.

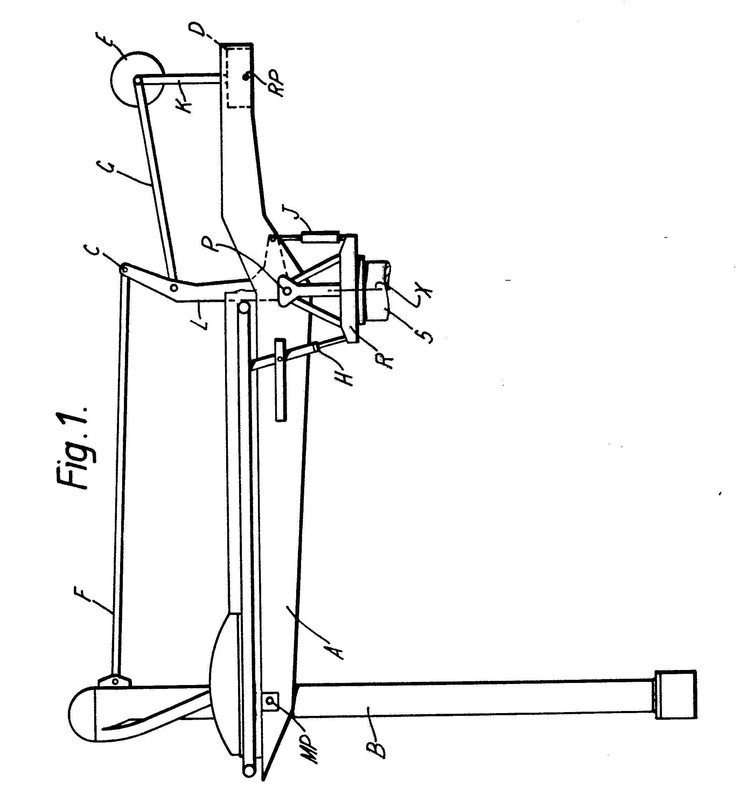

Referring first to Figure 1, the ship unloader comprises a main luffing boom A mounted, intermediate its ends, on a support frame R by means of a horizontally-extending pivot P, the frame R being carried by a main support structure S, relative to which it is free to slew about a vertical axis X.

A marine leg B, accommodating a bucket elevator (not shown), depends downwards from one end of the luffing boom A, being mounted on a transversely-extending pivot pin MP which allows the leg to be "kicked" inwards and outwards to a limited extent from the vertical under the control of at least one hydraulic ram J as will subsequently be explained.

The opposite end of the luffing boom A carries a fixed ballast D and a rocking ballast E, the latter being mounted at the upper end of a support frame K which is pivoted at its lower end to the luffing boom A, about a rear pin RP.

A bell crank lever C is pivoted around the central pivot pin P and has an upwardly extending arm L, coupled by means of links F, G to the top end of the marine leg B, which projects above the luffing boom A, and to the rocking ballast support frame K. The hydraulic ram J acts between the frame R and the rearwardly projecting arm M of the bell crank lever C as shown.

A further hydraulic ram H acts between the support frame S and the luffing boom A itself, to enable the boom to be luffed about the pivot P, as may be necessary for example to cater for variations in the height of material in the hold of a ship being unloaded and also for changing tidal conditions.

The construction of the link system which effectively provides a pantograph, is such as to compensate substantially completely for changes in the position of the centre of gravity of the leg B relative to the boom A as the leg is kicked in and out.

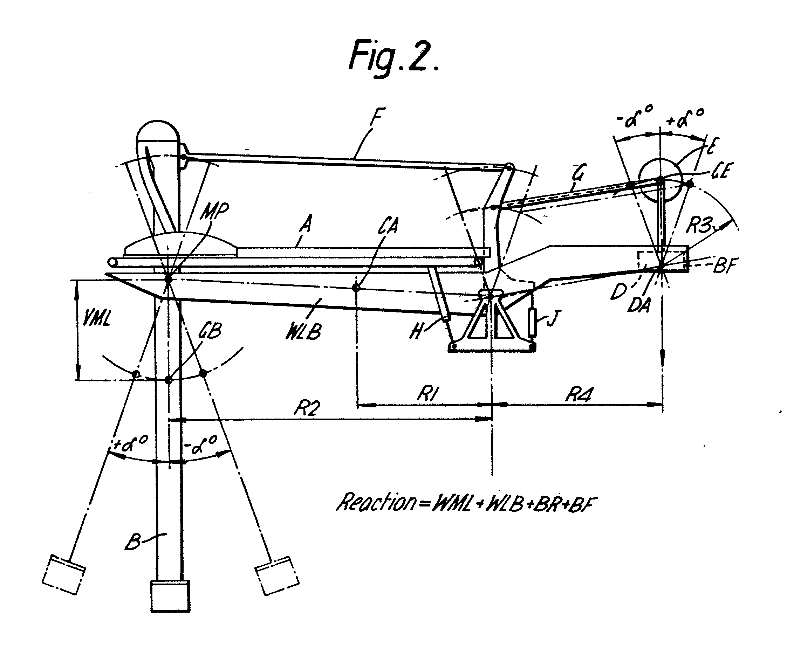

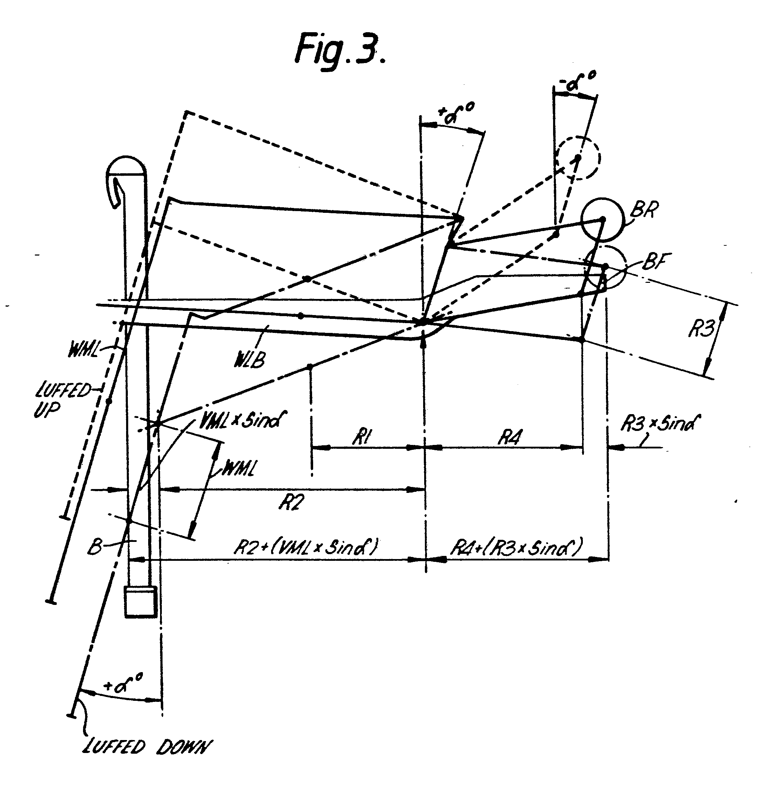

This is achieved by establishing relative dimensions of the linkages F, G, the coupling positions of the links to the marine leg, bell crank lever, and frame K and the values of the fixed and rocking ballasts D, E, to suit the dispositions of the centres of gravity of the marine elevator leg B and boom over the full operating range, as will be explained more clearly with reference to Figures 2 and 3.

In these figures the horizontal distance of the centre of gravity GA of the luffing boom A and associated items from its vertical axis of rotation is R1, and the horizontal distance of the centre of gravity DA of the fixed

2

ballast D from said axis is R4. The vertical distance of the centre of gravity GB of the marine leg B from its pivot pin MP when the leg is in the vertical position is VML, and this is at a horizontal distance R2 from the luffing axis of the luffing boom A. The radial distance of the centre of gravity GE of the rocking ballast E from the axis RP about which the support frame K is pivoted is R3, this also corresponding to the coupling position of the lever C.

Then, if the self weight of the luffing boom A and associated items is WLB, the self weight of the marine leg B is WML, and the weights of the fixed and rocking ballasts D, E is BF and BR respectively, the total ballast BT with the marine leg vertical is given by

$$BT = \frac{(WML \times R2) + (WLB \times R1)}{R4} \qquad 1$$

Displacement of self
weight WML of marine
leg B $\qquad = VML \times \pm Sin\alpha° \qquad 2$

Displacement of rocking
ballast E $\qquad = R3 \times\pm Sin\alpha° \qquad 3$

Moment about hinge pin MP
due to marine leg B
kicked out or in $\qquad = WML \times VML \times \pm Sin\alpha° \qquad 4$

Moment about rear hinge
pin RP as rocking ballast
is displaced back or
forward $\qquad = RB \times R3 \times \pm Sin\alpha° \qquad 5$

Value of RB required $\qquad = \dfrac{WML \times VML \times \pm Sin\alpha°}{R3 \pm Sin\alpha°} \qquad 6$

To balance weight of marine leg kicked out or in =
$[(VML \times \pm Sin\alpha°)+ R2]$ WML $+ (WLB \times R1) =$
$\qquad (R4 \times BF)+ [(R3 \times\pm Sin\alpha°)+ R4]$ BR $\qquad 7$

The required weight BF
of fixed ballast D $\qquad = BT - BR \qquad 8$

The analysis shows that any increase in or reduction of moment about the pivot as the marine leg B is kicked out or in through any angle $\alpha°$ within its range of movement is automatically compensated for by the balancing action of the rocking ballast E; and that the centre of gravity of the complete luffing system is always on centre line of its axis of rotation with the marine leg kicked in or out. This also applies over the full operating range of tilting movement of the luffing boom A, as shown in Figure 3.

3

The invention leads to substantial savings in weight of the main support structures and a reduction in size of the luffing rams J, H.

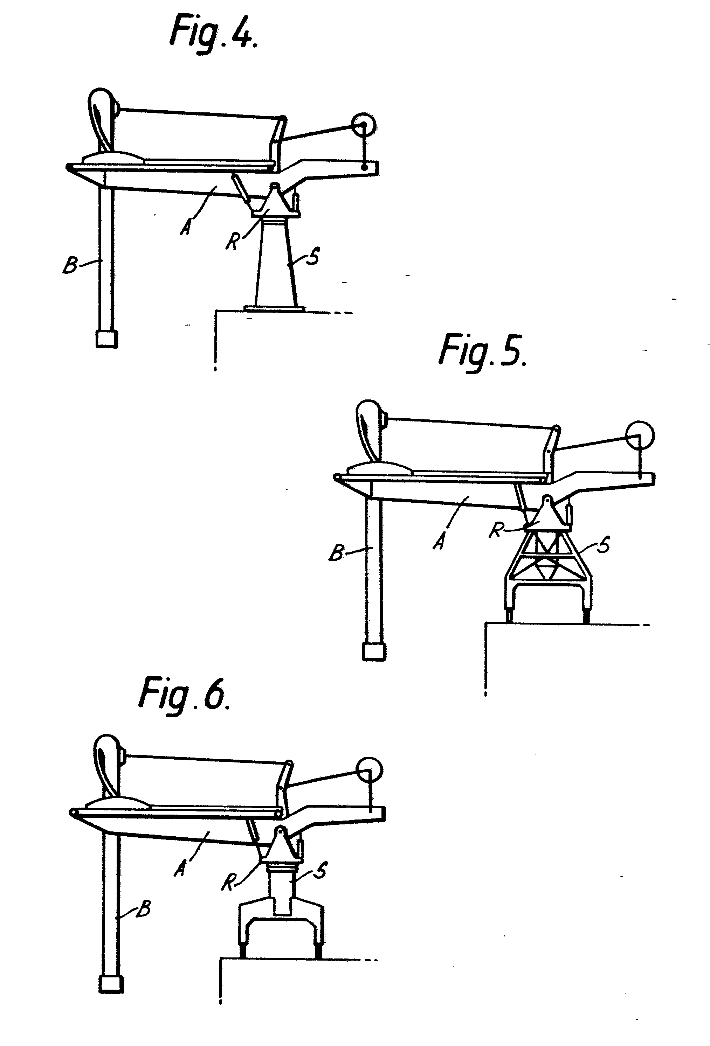

The invention is applicable to different forms of ship unloading structures and examples of some different structures making use of the invention are illustrated in Figures 4, 5 and 6.

Thus Figure 4 illustrates an arrangement utilising a fixed support structure S4, the frame R being capable of being slewed about a vertical axis as in the arrangement shown in Figures 1 to 3.

Figure 5 on the other hand illustrates a non-slewing arrangement in which the support structure S5 is in the form of a travelling carriage, the frame R which supports the luffing boom A in this case being non-rotatably mounted on the support structure.

Figure 6 illustrates another travelling arrangement, but this time with a slewing luffing boom A.

Various other forms of mounting arrangements may, of course, be employed, the mountings being either land based or ship mounted.

Loading of the bucket elevator within the marine leg may be effected by means of a rotary feeder or by any other suitable known device.

It will be appreciated that the invention is not only applicable to ship unloaders but may be used to advantage in other material handling machines having a swinging leg carried by the end of a boom.

## Claims

1. A material handling system of the kind referred to, in which the elevator leg is capable of being kicked inwards and outwards from the vertical, incorporating a pantograph arrangement linked to the leg and to a pivoted carrier member located at or adjacent the opposite end of the boom and carrying a counterweight, such that pivoting movement of the elevator leg is accompanied by simultaneous movement of the counterweight in a direction such as to compensate for changes in the position of the centre of gravity of the leg relative to the boom.

2. A material handling system according to Claim 1 in which the boom is mounted on, and is arranged to luff about a horizontal axis to a limited extent relative to a support, wherein the pantograph arrangement is such as to ensure that the elevator leg remains at substantially a set kick angle over the full range of luffing movement of the boom.

3. A material handling system according to Claim 1 or 2 wherein the pantograph and counterweight are such that changes in the position of the centre of gravity of the elevator leg are compensated for substantially completely.

4. A material handling system according to Claim 1, 2 or 3 wherein the elevator leg accommodates a bucket elevator.

5. A material handling system according to any preceding Claim wherein the boom is mounted on, and is arranged to luff about a horizontal axis to a limited extent relative to a support, the support carries a bell crank lever also pivotable about a horizontal axis parallel to said horizontal boom axis, the bell crank lever having an approximately horizontal arm linked to acutating means for producing a pivoting movement of the lever, and an upwardly extending arm linked both to the elevator leg and the pivoted carrier member in a manner such that movement of the lever produces both a pivoting movement of the elevator leg relative to the boom, and the compensating movement of the counterweight.

6. A material handling system according to Claim 2 or 5 wherein the support for the boom is mounted on, and is rotatable about a vertical axis relative to a main support structure.

7. A material handling system according to any preceding Claim wherein the boom carries, in addition to the pivotally mounted counterweight, a relatively fixed ballast weight.

Fig.1.

# Fig.2.

Reaction=WML+WLB+BR+BF

Fig.3.

0242192

**Fig.4.**

**Fig.5.**

**Fig.6.**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 131 664 (SIMON-CARVES LTD.) <br> * whole document * <br><br> ----- | 1-7 | B 65 G 67/60 |

|  |  |  | **TECHNICAL FIELDS SEARCHED (Int. Cl.4)** |
|---|---|---|---|
|  |  |  | B 65 G 67/00 |

The present search report has been drawn up for all claims

| Place of search | Date of completion of the search | Examiner |
|---|---|---|
| BERLIN | 07-07-1987 | SIMON J J P |